(19) Europäisches Patentamt
European Patent Office
Office européen des brevets

(11) **EP 4 364 827 A1**

(12) **EUROPEAN PATENT APPLICATION**
published in accordance with Art. 153(4) EPC

(43) Date of publication:
**08.05.2024 Bulletin 2024/19**

(21) Application number: **22832798.7**

(22) Date of filing: **13.06.2022**

(51) International Patent Classification (IPC):
*B01D 61/00* (2006.01)　　*B01D 63/02* (2006.01)
*B01D 69/00* (2006.01)　　*B01D 69/02* (2006.01)
*B01D 69/08* (2006.01)　　*B01D 69/10* (2006.01)
*B01D 69/12* (2006.01)　　*B01D 71/56* (2006.01)
*B01D 71/68* (2006.01)

(52) Cooperative Patent Classification (CPC):
**B01D 61/00; B01D 63/02; B01D 69/00;
B01D 69/02; B01D 69/08; B01D 69/10;
B01D 69/12; B01D 71/56; B01D 71/68**

(86) International application number:
**PCT/JP2022/023659**

(87) International publication number:
**WO 2023/276642 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.06.2021  JP 2021106841**

(71) Applicant: **Asahi Kasei Kabushiki Kaisha
Tokyo 1000006 (JP)**

(72) Inventor: **HOTTA, Daisuke
Tokyo 100-0006 (JP)**

(74) Representative: **D Young & Co LLP
3 Noble Street
London EC2V 7BQ (GB)**

(54) **FORWARD OSMOSIS MEMBRANE MODULE AND MANUFACTURING METHOD THEREFOR**

(57)　　Provided is a forward osmosis membrane module composed of a plurality of hollow-fiber forward osmosis membranes. The forward osmosis membranes are each provided with a separation function layer on a surface of a hollow-fiber support membrane having a porous support body. The membrane surface area of the forward osmosis membrane module is 0.1 m² or more. The porous support body is such that the porosity of a dense layer up to 1.0 $\mu$m from the interface with the separation function layer is 40% or less. The average thickness of the separation function layer is 2.0 $\mu$m or less, and the variation coefficient of the average thickness of the separation function layer is 30% or less in the radial direction and longitudinal direction of the forward osmosis membrane module.

FIG. 1

**Description**

FIELD

The present invention relates to a forward osmosis membrane module and to a method for its production.

BACKGROUND

Forward osmosis is known as a method for concentrating feed solutions. In a forward osmosis method, a feed solution and a draw solution having a higher osmotic pressure than the feed solution are brought adjacent to each other across a forward osmosis membrane, causing the solvent to move from the feed solution to the draw solution. The driving force for forward osmosis is the difference in osmotic pressure between the feed solution and draw solution. Therefore, unlike in existing concentration techniques such as distillation or reverse osmosis, forward osmosis is expected to allow feed solutions to be concentrated without requiring heating or high pressure, and without loss of valuable components present in the feed solutions.

Forward osmosis is similar to reverse osmosis in that a solvent is caused to permeate preferentially over solutes using a semi-permeable membrane. However, forward osmosis methods utilize the difference in osmotic pressure to cause permeation of solvent from a dilute solution (feed solution) to a concentrated solution (draw solution) side, and in this regard, it differs from reverse osmosis whereby pressure is applied to the concentrated solution side against the difference in osmotic pressure, causing permeation from the concentrated solution side to the dilute solution side.

Membranes suited for forward osmosis methods are designed to have high permeation volume (permeability) for solvents from the feed solution into the draw solution, and low diffusion of components of the draw solution into the feed solution (salt back diffusion). However, it is generally difficult to achieve low salt back diffusion with a high permeation volume, and there exists a trade-off in that obtaining high performance in either one requires sacrifice in the other.

From the viewpoint of the differences between forward osmosis methods and reverse osmosis methods, and of designing a membrane suited for forward osmosis, there have been proposed composite semipermeable membrane modules provided with one composite semipermeable membrane or multiple composite semipermeable membranes, comprising a base or support membrane and a separation function layer provided over it.

PTL 1, for example, teaches that by using a composite membrane comprising a polysulfone membrane having specified mean pore size, average porosity and metaphenylenediamine diffusion, and a separation membrane provided over it, it is possible to reduce the economic load or wastewater disposal load, to obtain both a high salt rejection rate and high permeability, primarily in reverse osmosis.

PTL 2 describes a composite semipermeable membrane comprising a base, a porous support provided on the base and a separation function layer provided on the porous support, wherein the porous support is designed to have a dense layer in contact with the separation function layer and a macro-void layer situated between the dense layer and the base, the long diameters and thicknesses of the voids in the dense layer being controlled and the proportion of macro-voids in the macro-void layer being controlled, to maintain water permeability even when the composite semi-permeable membrane is used during high-pressurized operation. While it is not specified whether the composite semipermeable membrane described in PTL 2 is suitable for forward osmosis or reverse osmosis, it is thought to be suitable for reverse osmosis based on the recommended operating pressure and the descriptions in the Examples.

PTL 3 describes a composite hollow fiber membrane comprising a hollow fiber porous support membrane, and a semi-permeable membrane layer which includes a crosslinked polyamide polymer formed from a polyfunctional amine compound and a polyfunctional acid halide compound, wherein an inclination is provided in the dimensions of the pores from one toward the other of the inner surface and outer surface of the hollow fiber porous support membrane to adjust the fractional particle size of the hollow fiber porous support membrane, a crosslinked hydrophilic resin is added to at least the small-pore dense side from among the inner surface and outer surface of the hollow fiber porous support membrane, and the semi-permeable membrane layer is contacted with the dense side of the support layer, whereby suitable separation is achieved in forward osmosis and durability of the composite hollow fiber membrane is also excellent.

PTL 4 proposes a forward osmosis membrane module incorporating a forward osmosis membrane provided with a macromolecular polymer separation active layer on the surface of a microporous support membrane, examining the salt back diffusion volume and permeation volume of the forward osmosis membrane under specified conditions, from the viewpoint of utility and durability during actual operation for concentration.

[CITATION LIST]

[PATENT LITERATURE]

[PTL 1] Japanese Unexamined Patent Publication No. 2011-194272
[PTL 2] Japanese Unexamined Patent Publication No. 2018-039003
[PTL 3] International Patent Publication No. WO2019/131304
[PTL 4] International Patent Publication No. WO2020/241860

SUMMARY

[TECHNICAL PROBLEM]

In forward osmosis treatment, the solvent is present on both the separation function layer side and the porous support membrane side of the forward osmosis treatment apparatus containing the composite semipermeable membrane, and therefore during operation of the forward osmosis treatment apparatus, system pressure is undesirably applied in a direction in which the separation function layer can become detached from the porous support membrane, such as the direction approximately perpendicular to the direction of permeation, or the direction approximately parallel to the interface between the separation function layer and the porous support membrane, or the direction opposite from the direction of permeation, potentially causing detachment of the separation function layer.

In the prior art, however, it has been thought that improved permeability of the forward osmosis membrane requires an increased void percentage or surface opening ratio inside the porous support membrane, and therefore in order to exhibit the utility of a forward osmosis treatment apparatus provided with a forward osmosis membrane module, one remaining issue has been the pressure resistance of the forward osmosis membrane module during positive pressure from the porous support membrane side.

Moreover, even forward osmosis membrane modules that were believed to have constant pressure resistance in the prior art, are still in need of improvement in durability. For example, there is demand for a forward osmosis membrane that continues to exhibit high performance while withstanding the pressure that is easily exerted by the head or erroneous operation in the system (such as 50 kPa or greater), as well as a forward osmosis membrane module comprising it.

Composite forward osmosis membranes, obtained using a hollow fiber membrane as the support membrane and coating the surface with a separation function layer, are usually used in forward osmosis membrane modules incorporating a plurality of the composite forward osmosis membranes, and in such cases, variation of the hollow fiber forward osmosis membranes in the lengthwise direction can result in detachment of all or some of the separation function layers from the weakest sections when subjected to pressure, making it impossible to exhibit high performance for the module as a whole.

In light of these circumstances, it is an object of the present invention to provide a forward osmosis membrane module composed of forward osmosis membranes each having a separation function layer on the surface of a hollow fiber forward osmosis membrane, and exhibiting excellent physical durability and stable high performance, as well as a method for producing it.

[SOLUTION TO PROBLEM]

The present inventors have completed this invention upon finding that in a forward osmosis membrane module comprising a composite forward osmosis membrane, the aforementioned problems can be solved by specifying the void percentage of the hollow fiber support membrane, the average thickness of the separation function layer and the coefficient of variation in the average thickness of the separation function layer. Exemplary aspects of the invention are as follows.

<1> A forward osmosis membrane module composed of a plurality of hollow fiber forward osmosis membranes, wherein:

the forward osmosis membranes each have a separation function layer provided on a surface of a hollow fiber support membrane having a porous support,
a membrane area of the forward osmosis membrane module is 0.1 m$^2$ or greater,
the hollow fiber support membrane has a dense layer with a void percentage of 40% or lower at a location up to 1.0 $\mu$m in a depthwise direction from an interface between the porous support and the separation function layer,
an average thickness of the separation function layer is 2.0 $\mu$m or lower, and
the separation function layer has a coefficient of variation in the average thickness of the separation function layer of 30% or lower in a radial direction and a lengthwise direction of the forward osmosis membrane module.

<2> The forward osmosis membrane module according to <1> above, wherein the coefficient of variation in the average thickness of the separation function layer is 25% or lower.

<3> The forward osmosis membrane module according to <1> or <2> above, wherein the coefficient of variation in the average thickness of the separation function layer is 20% or lower.

<4> The forward osmosis membrane module according to any one of <1> to <3> above, wherein the separation function layer has an irregular structure.

<5> The forward osmosis membrane module according to any one of <1> to <4> above, wherein the void percentage of the dense layer is 5% or greater.

<6> The forward osmosis membrane module according to any one of <1> to <5> above, wherein the void percentage of the dense layer is 9% to 25%.

<7> The forward osmosis membrane module according to any one of <1> to <6> above, wherein the average thickness of the separation function layer is 0.05 $\mu$m or greater.

<8> The forward osmosis membrane module according to any one of <1> to <7> above, wherein the average thickness of the separation function layer is 0.2 to 0.8 $\mu$m.

<9> The forward osmosis membrane module according to any one of <1> to <8> above, wherein the dense layer has a separation function layer component incorporated into pores of the dense layer.

<10> The forward osmosis membrane module according to any one of <1> to <9> above, wherein the separation function layer is provided on an inner surface of the hollow fiber support membrane.

<11> The forward osmosis membrane module according to any one of <1> to <10> above, wherein the hollow fiber support membrane consists only of the porous support and the separation function layer.

<12> The forward osmosis membrane module according to any one of <1> to <11> above, wherein the porous support includes polysulfone or polyether sulfone as a main component.

<13> A method for producing a forward osmosis membrane module, comprising the following steps:

(I) a separation function layer-forming step in which a plurality of hollow fiber support membranes each with a porous support are used, forming a separation function layer on a surface of each hollow fiber support membrane to fabricate a hollow fiber forward osmosis membrane module comprising hollow fiber forward osmosis membranes,

(II) a liquid-encapsulating step in which a liquid is encapsulated and held in the hollow fiber forward osmosis membrane module, at least on the separation function layer-forming surface side, and

(III) a heat treatment step in which temperatures of the hollow fiber forward osmosis membrane module and the liquid are raised to 50°C or higher.

<14> The method for producing a forward osmosis membrane module according to <13> above, wherein a membrane area of the forward osmosis membrane module is 0.1 m$^2$ or greater.

<15> The method for producing a forward osmosis membrane module according to <13> or <14> above, wherein in the separation function layer-forming step (I), the hollow fiber support membrane has a dense layer at a location up to 1.0 $\mu$m in a depthwise direction from an interface between the porous support and the separation function layer, and a void percentage of the dense layer is 40% or lower.

<16> The method for producing a forward osmosis membrane module according to <15> above, wherein in the separation function layer-forming step (I), the void percentage of the dense layer is 10 to 40%.

<17> The method for producing a forward osmosis membrane module according to any one of <13> to <16> above, wherein in the separation function layer-forming step (I), the porous support includes polysulfone or polyether sulfone as a main component.

<18> The method for producing a forward osmosis membrane module according to any one of <13> to <17> above, wherein in the separation function layer-forming step (I),

the separation function layer is a membrane including a macromolecular polymer of at least one first monomer selected from among polyfunctional amines and at least one second monomer selected from among polyfunctional acid halides, and

a liquid membrane of a first solution comprising one of the first monomer and the second monomer is formed on an inner surface of the hollow fiber support membrane, after which a pressure difference is created between an inside and outside of the hollow fiber support membrane so as to satisfy the relationship: (inside pressure) > (outside pressure), and a second solution comprising the other of the first monomer and second monomer is then contacted with the liquid membrane of the first solution.

<19> The method for producing a forward osmosis membrane module according to <18> above, wherein the pressure difference is created by pressure reduction on the outside of the hollow fiber support membrane.

<20> The method for producing a forward osmosis membrane module according to <18> above, wherein the pressure difference is created by pressurization of the outside and inside of the hollow fiber support membrane to respectively different pressures.

<21> The method for producing a forward osmosis membrane module according to any one of <18> to <20> above, wherein the pressure difference is 10 to 90 kPa.

<22> The method for producing a forward osmosis membrane module according to any one of <13> to <21> above, wherein in the liquid-encapsulating step (II), the liquid is added to and held on insides and outsides of the hollow fiber forward osmosis membranes.

<23> The method for producing a forward osmosis membrane module according to any one of <13> to <22> above, wherein in the liquid-encapsulating step (II), the liquid is pressurized to fill the hollow fiber forward osmosis membranes, so that the liquid is held in the hollow fiber forward osmosis membranes.

<24> The method for producing a forward osmosis membrane module according to any one of <13> to <23> above, wherein in the liquid-encapsulating step (II), the liquid is water.

<25> The method for producing a forward osmosis membrane module according to any one of <13> to <24> above, wherein in the liquid-encapsulating step (II), the forward osmosis membrane module is immersed in the liquid.

<26> The method for producing a forward osmosis membrane module according to any one of <13> to <24> above, wherein in the liquid-encapsulating step (II), the liquid is encapsulated in the forward osmosis membrane module.

<27> The method for producing a forward osmosis membrane module according to any one of <13> to <26> above, wherein in the heat treatment step (III), the temperatures of the forward osmosis membrane module and the liquid are raised to 100°C or higher.

<28> The method for producing a forward osmosis membrane module according to any one of <13> to <27> above, wherein in the heat treatment step (III), the temperatures of the forward osmosis membrane module and the liquid are raised to 121°C or higher.

<29> The method for producing a forward osmosis membrane module according to any one of <13> to <28> above, wherein in the heat treatment step (III), the temperatures of the forward osmosis membrane module and the liquid are raised in a range of 145°C or lower.

<30> The method for producing a forward osmosis membrane module according to any one of <13> to <29> above, wherein the heat treatment step (III) includes continuing to raise the temperatures under pressure in a temperature range of a boiling point of the liquid or higher.

[ADVANTAGEOUS EFFECTS OF INVENTION]

According to the invention it is possible to provide a forward osmosis membrane module having excellent physical durability and exhibiting stable high performance, as well as a method for producing the same.

BRIEF DESCRIPTION OF DRAWINGS

Fig. 1 is a cross-sectional schematic drawing showing one mode of the forward osmosis membrane module.
Fig. 2 is a schematic diagram showing an example of the configuration of an apparatus used to form a separation function layer in a porous support membrane module.

DESCRIPTION OF EMBODIMENTS

An embodiment of the invention (hereunder referred to as "the embodiment") will now be explained in detail as a non-limitative example.

<Forward osmosis membrane module>

The forward osmosis membrane module of the embodiment can be suitably used for concentration of liquid foods or pharmaceutical solutions, for example. Using a forward osmosis membrane of the embodiment, it is possible to accomplish unheated high concentration, whereby a high degree of concentration of components to be concentrated is achieved without heating them, and to greatly inhibit outflow or inflow of solutes while inhibiting degradation of the components or contamination by foreign matter. The forward osmosis membrane module of the embodiment can be suitably utilized for dewatering purposes, as well as for seawater desalination, brackish water desalination or treatment of accessory water discharged from shale gas fields or oil fields, for concentration of fertilizer solutions, or for dilution in which concentrates are used as draw solutions.

The forward osmosis membrane of the embodiment has a separation function layer provided on the surface of a hollow fiber support membrane with a porous support, and specifically, it is made of a separation function layer composed of a semi-permeable membrane which allows passage only of specific substances, and a porous support membrane that physically supports the separation function layer on the surfaces of the hollow fiber support membrane, namely the inner surface and the outer surface.

The forward osmosis membrane module of the embodiment is composed of a plurality of hollow fiber forward osmosis membranes. Each hollow fiber forward osmosis membrane has a separation function layer formed on the surface of the hollow fiber support membrane with a porous support, with the membrane area of the forward osmosis membrane module being 0.1 m² or greater and preferably 0.1 m² to 1,000 m² from a practical standpoint. This membrane area is described in detail below.

The forward osmosis membrane module of the embodiment is preferably fabricated by first forming the separation function layer on the inside or outside of the hollow fiber support membrane after the porous hollow fiber support membrane has been modularized, in order to prevent the separation function layer formed on the surface of the hollow fiber support membrane from suffering damage during contact with guide rolls or handling during module formation. Such a step can avoid damage to the separation function layer that is formed.

The permeation volume of the forward osmosis membrane module of the embodiment is preferably as large as possible. However, in order to ensure that the permeation volume is at least on a level obtained with a module having a space occupied volume equivalent to that of currently available membranes, the permeation volume should be 4 kg/(m² × hr) or greater. In order to avoid potentially depleting the raw water and generating deposits when the raw water to be treated is caused to flow under conditions with minimal pressure loss, the permeation volume is preferably 200 kg/(m² × hr) or lower. For the embodiment, the permeation volume of the forward osmosis membrane can be measured by the method described under the "EXAMPLES".

The permeation volume of a hollow fiber membrane module, for the purpose of the present specification, is the amount of water moving from the raw water to the draw solution by osmotic pressure when the raw water to be treated and the high-concentration draw solution have been situated across a forward osmosis membrane, and it is defined by the following mathematical formula (1):

$$F = L/(M \times H) \quad (1)$$

{where F is the permeation volume (kg/(m² × hr)), L is the amount of permeated water (kg), M is the inner surface area (m²) of the membrane, and H is time (hr)}.

The back diffusion of salts (salt back diffusion) of the forward osmosis membrane module of the embodiment is preferably as small as possible. A large salt back diffusion may lead to contamination of the raw water or loss of the draw solute. From the same viewpoint, the salt back diffusion of the forward osmosis membrane module of the embodiment is preferably 0.1% or lower, more preferably 0.05% or lower and even more preferably 0.02% or lower with respect to the permeation volume (kg/m²/hr) mentioned above. For the embodiment, the salt back diffusion of the forward osmosis membranes can be measured by the method described under the

"EXAMPLES".

The salt back diffusion of a forward osmosis membrane module, for the purpose of the present specification, is the amount of salt moving from the draw solution to the raw water when the raw water to be treated and the high-concentration draw solution have been situated across a forward osmosis membrane, and it is defined by the following mathematical formula (2):

$$RSF = G/(M \times H) \quad (2)$$

{where RSF is the salt back diffusion (g/(m² × hr)), G is the amount of permeated salt (g), M is the area (m²) of the membrane, and H is time (hr)}.

The draw solution is a solution exhibiting higher osmotic pressure than the raw water containing the substance to be separated, and having a function of causing water to move from the raw water through the semi-permeable membranes. The draw solution exhibits high osmotic pressure by comprising the draw solute at high concentration.

Examples of draw solutes include:

salts that are readily soluble in water, such as sodium chloride, potassium chloride, sodium sulfate, sodium thiosulfate, sodium sulfite, ammonium chloride, ammonium sulfate and ammonium carbonate;
alcohols such as methanol, ethanol, 1-propanol and 2-propanol;

glycols such as ethylene glycol and propylene glycol;
polymers such as polyethylene oxide and propylene oxide; and
copolymers of monomers composing these polymers.

The hollow fiber support membrane of the embodiment has a porous support, the porous support being a membrane for support of the separation function layer, which itself preferably exhibits essentially no separation performance for the substance to be separated. The porous support used may also be one including a publicly known microporous hollow fiber support membrane.

From the viewpoint of causing the forward osmosis membrane module to exhibit stable high performance and excellent physical durability, the hollow fiber support membrane preferably has the separation function layer provided on its inner surface, and/or preferably consists entirely of the porous support and separation function layer, and more preferably the structural member does not include a substrate such as a nonwoven fabric. If a substrate is not included, then there will be no risk of peeling or cracking of the substrate from the porous support due to insufficient adhesiveness or differences in temperature-induced dimensional change, at the interface between the porous support and substrate during high temperature load. This tendency is more notable at higher temperature. The substrate is usually a porous body with a larger pore size than the porous support or separation function layer, and will usually comprise a material different from the porous support as the main component. The pore size of the substrate will generally be about 0.1 $\mu$m to 100 $\mu$m, being usually evaluated by the basis weight or air flow rate, with a basis weight of about 20 g/m$^2$ to 150 g/m$^2$ and an air flow rate of about 0.5 cc/(cm$^2$ $\times$ sec) to 30 cc/(cm$^2$ $\times$ sec) as measured by the Frazier method.

The hollow fiber support membrane of the embodiment has a dense layer with a void percentage of 40% or lower at a location up to 1.0 $\mu$m in the depthwise direction from the interface between the porous support and the separation function layer. By having the positioned dense layer with a specified void percentage, the forward osmosis membrane module will tend to have reduced detachment of the separation function layer even when subjected to system pressure in the direction opposite from the direction of stacking of the forward osmosis membrane (usually the membrane thickness direction), or back pressure, during operation of the module, and it will therefore exhibit stable high performance and excellent physical durability. If the void percentage has a dense layer in this range, it will be easier to reduce the average thickness of the separation function layer (described below), allowing the forward osmosis performance to be increased as a result. From the viewpoint of ensuring adhesiveness with even dispersion of pressure, and of more easily undergoing the effect of the heat treatment step (described below), the void percentage of the dense layer is more preferably 25% or lower and even more preferably 20% or lower. More specifically, the forward osmosis membrane module of the embodiment as a whole is practical since it can withstand pressure on the side where the separation function layer is released (that is, back pressure), and its forward osmosis performance is high (that is, the water permeability flux is high and the salt back diffusion RSF is low). From the viewpoint of ensuring forward osmosis performance, and especially water permeability, the void percentage of the dense layer is preferably 5% or greater, more preferably 5 to 40% and most preferably 9 to 25%. If the void percentage of the dense layer is within this numerical range, it will be easy to form a dense layer including a separation function layer, so that adhesiveness can be ensured more easily. If the forward osmosis membrane having the separation function layer included in the dense layer is heat treated in the presence of the liquid described below, then reaction of the separation function layer (such as crosslinking reaction) in the pores of the dense layer will proceed more quickly, further increasing the adhesiveness. This effect tends to be accelerated with high temperature during heat treatment.

The void percentage can be calculated using an image taken with a microscope, for example.

When a cross-sectional image is obtained using a scanning electron microscope, for example, the sample may be prepared in the following manner for observation.

The membrane sample is immersed in purified water, frozen using liquid nitrogen, and then dried by a freeze-drying method. A cross-section of the dried sample perpendicular to the in-plane direction of the membrane is prepared by cleavage or Broad Ion Beam (BIB) processing, and preferably BIB processing. The obtained cross-section is thinly coated with platinum, platinum/palladium, osmium tetroxide or osmium and preferably osmium, and used as the observation sample. The cross-sectional observation sample is observed at an acceleration voltage of 1 to 6 kV, and preferably an acceleration voltage of preferably 1 kV.

The observation magnification may be any magnification that allows observation of the contact interface between the porous support and separation function layer, or the region near the surface of the support membrane. For example, it is preferably 5,000x to 100,000x and more preferably 50,000x.

For the embodiment, the contact interface between the porous support and separation function layer of the forward osmosis membrane can be confirmed in the following manner.

As one method, an image of the cross-section of the forward osmosis membrane taken using a scanning electron microscope is loaded into appropriate image processing software and subjected to image processing. The image processing software used may be ImageJ (developed by the U.S. National Institutes of Health), for example. The SEM photograph loaded into ImageJ is binarized by an appropriate binarization method selected based on the obtained image, and preferably Otsu's method. The average brightness in the direction horizontal to the membrane surface is calculated for the entire obtained binarized image along every predetermined distance (such as 1 pixel) from the membrane surface in the depthwise direction. The average brightnesses from the surface of the separation function layer toward the support membrane side are compared, with the horizontal direction at the point of highest average brightness considered to be the contact interface between the porous support and separation function layer of the forward osmosis membrane.

Even when the contact interface between the porous support and separation function layer of the forward osmosis membrane is not straight, the aforementioned method can be used to unambiguously discern the contact interface between the porous support and separation function layer of the forward osmosis membrane so long as the forward osmosis membrane is not observed with intentional bending.

A porous support may also have macro-voids near the surface layer. Macro-voids are voids with long diameters of 1.0 $\mu$m or greater (large voids). A cross-sectional image with macro-voids will sometimes be selected based on the pore structure within the voids instead of the voids themselves (the structure seen further back in the cross-sectional image) during binarization. Since the void structure up to 1.0 $\mu$m in the depthwise direction from the interface between the porous support and separation function layer is important for the embodiment, an image with macro-voids preferably has the macro-voids shaded black before binarization.

The dense layer including the separation function layer will generally form naturally with the separation function layer component included in the pores of the porous support, when interfacial polymerization has been carried out on the porous support by the interfacial polymerization method described below. The thickness of the region may be a thickness of 1 to 250 nm from the contact interface between the porous support and the separation function layer. According to the embodiment, the separation function layer component is preferably included in the porous support pores at a distant location of preferably 1 nm or greater, and more preferably 10 nm or greater, even more preferably 30 nm to 250 nm and most preferably 40 nm to 200 nm, from the interface in the thickness direction of the forward osmosis membrane. If the separation function layer component is included in the porous support pores in the range of up to 250 nm in the thickness direction, then it will be possible to form a dense layer with the separation function layer incorporated into the pores, by a method of coating a second monomer solution after the first monomer solution has seeped into the porous support during the interfacial polymerization method described below. A method in which the first monomer solution is caused to seep into the porous support, and then depressurized to cause further seepage into the porous support, allows the range of penetration to be increased and controlled without being limited to the region in the thickness direction mentioned above.

More specifically, a dense layer having the separation function layer incorporated into the pores can be confirmed using an image taken by the microscope as described above. When the separation function layer is visible with the naked eye, the length from the contact interface between the porous support and separation function layer of the forward osmosis membrane to the edge of incorporation of the separation function layer may be used as the thickness of the dense layer incorporating the separation function layer.

More simply, when the region up to 1.0 $\mu$m in the depthwise direction from the contact interface between the dense layer and the separation function layer is observed in a scanning electron microscope image taken at 50,000x magnification, for example, and the depthwise direction is divided into 20 portions of 0.05 $\mu$m each, in the divided dense layer up to the point where the void percentage of each dense layer that was divided into 20 portions (the divided dense layer) is at least 0.25 times the void percentage up to 1.0 $\mu$m, then the length from the edge of the divided dense layer in the depthwise direction up to the contact interface between the porous support and the separation function layer may be considered as the thickness of the region of the dense layer incorporating the separation function layer.

From the same viewpoint described above, the inner surface of the hollow fiber support membrane preferably has micropores with a pore size of preferably 0.001 $\mu$m to 0.1 $\mu$m, more preferably 0.003 $\mu$m to 0.05 $\mu$m and even more preferably 0.003 $\mu$m to 0.01 $\mu$m .

The porous support preferably has as loose a structure as possible while maintaining strength, in order to reduce the permeation resistance for permeating liquid at locations beyond 1.0 $\mu$m in the depthwise direction from the interface between the porous support and the separation function layer, such as a location up to the outer surface, for example. The loose structure at such sections preferably consists of reticular or finger voids, or combinations thereof.

The permeability of the hollow fiber support membrane of the embodiment, represented as the amount of purified water permeating a fixed effective membrane area (such as the inner surface area or outer surface area) in a fixed period of time during application of a constant pressure, is preferably 100 kg/m$^2$/hr/100 kPa or greater and more preferably 200 kg/m$^2$/hr/100 kPa or greater. If the permeability of the support membrane is too low, the permeability of the obtained hollow fiber forward osmosis membrane module will also tend to be low.

The permeability of the support membrane is preferably as high as possible without impairing the mechanical strength of the support membrane. A high permeability generally corresponds to low mechanical strength. The permeability of the hollow fiber support membrane of the embodiment is therefore preferably about 50,000 kg/m$^2$/hr/100 kPa or lower and more preferably 10,000 kg/m$^2$/hr/100 kPa or lower.

The material of the hollow fiber support membrane may be any one that can be formed as a porous support. However, during production of a composite membrane by the production method preferred for the embodiment, it must not suffer chemical damage by the monomer solution used. From the viewpoint of chemical resistance, membrane formability and durability, therefore, the material of the hollow fiber support membrane preferably comprises one or more selected from among polysulfone, polyether sulfone, polyacrylonitrile, polyethylene, polypropylene, polyamide, polyvinylidene fluoride and cellulose acetate as the main component, while from the viewpoint of controlling the pore size of the support membrane or forward osmosis membrane, it more preferably comprises polysulfone or polyether sulfone as the main component. That a member comprises a specific material as the main component means that the content of the specific material is 50% by weight or greater based on the weight of the member. From the same viewpoint, the porous support preferably includes polysulfone or polyether sulfone as the main component, and more preferably it includes polysulfone or polyether sulfone at 50% by weight or greater based on the weight of the porous support.

The yarn diameter size of the hollow fiber support membrane used for the embodiment is not particularly restricted, but in consideration of membrane formation stability, easy of handling and membrane area as a module, preferably the outer diameter is 100 $\mu$m to 3,000 $\mu$m and the inner diameter is 30 $\mu$m to 2,500 $\mu$m, and more preferably the outer diameter is 200 $\mu$m to 1,500 $\mu$m and the inner diameter is 50 $\mu$m to 1,000 $\mu$m. Such a hollow fiber support membrane can be produced by a publicly known dry membrane forming method, melt membrane forming method or wet membrane forming method, using a material selected from among the materials mentioned above.

The forward osmosis membrane of the embodiment may be a membrane module (forward osmosis membrane module) having a plurality of membranes. The construction of the membrane module is not particularly restricted, but generally a compartment where liquid contacts only with one surface side of the membrane and a compartment where liquid contacts only with the other surface side of the membrane, are separated by an adhesive resin that anchors the membrane to the module housing. A hollow fiber membrane, as an example, has a construction with separation between a compartment where liquid contacts only with the inner surface side of the membrane and a compartment where liquid contacts only with the outer surface side of the membrane. The size of the module housing is not particularly restricted, and for example, a cylindrical housing with a 0.5-inch to 20-inch diameter and a length of 4 cm to 10 m may be used. The module may be formed using an adhesive such as a urethane or epoxy resin as the adhesive resin. The adhesive can ensure circulation through the hollow fibers being solidified in a manner such that the holes of the hollow fibers are obstructed.

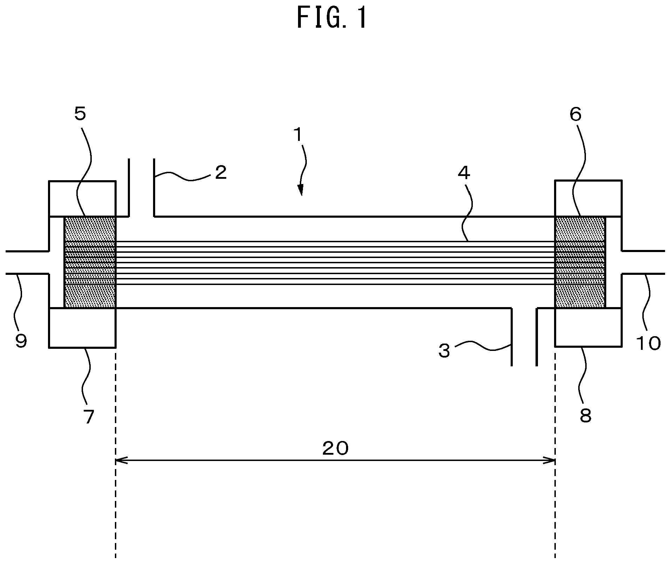

The forward osmosis membrane module (hollow fiber membrane module) 1 shown in Fig. 1 has a structure in which a fiber bundle consisting of a plurality of hollow fibers 4 is packed into a tubular body, and both ends of the hollow fiber bundle are anchored to the body by adhesive-anchored sections 5, 6. The tubular body has outer conduits 2, 3 on the sides, and are closed off by headers 7, 8. The adhesive-anchored sections 5, 6 are each solidified so as to obstruct the holes of the hollow fibers. The headers 7, 8 both have inner conduits 9, 10 which communicate with the insides of the hollow fibers 4 (hollow sections) but do not communicate with the outsides. The conduits allow liquid to be introduced into the hollow fibers 4 or removed from them. The outer conduits 2, 3 communicate with the outsides of the hollow fibers 4 but do not communicate with the insides.

The hollow fiber membrane module 1 has a structure in which liquid flowing on the inside and liquid flowing on the outside contact only through the hollow fibers 4 (forward osmosis membranes).

For the purpose of the present specification, the membrane area of the forward osmosis membrane module (hollow fiber membrane module) 1 is the effective membrane surface area, and it may be the effective membrane surface area on either the inner surface or the outer surface. As shown in Fig. 1, the hollow fiber membrane module 1 has an effective membrane area portion 20 which is the portion that carries out the separation function. The effective membrane area portion 20 in Fig. 1 is the portion where the hollow fiber bundles are packed without the adhesive-anchored sections 5, 6, being the portion that essentially carries out the separation function. When the separation function layer consists of hollow fibers on the inner surface (not shown), the effective membrane area can be calculated based on the total of the inner surface areas of the hollow fibers, and represented by: (inner circumference of hollow fibers) $\times$ (length from adhesive layer to adhesive layer of the module) $\times$ (number of hollow fiber membranes). When the separation function layer consists of hollow fibers arranged on the outer surface (not shown), the effective membrane area can be calculated based on the total of the outer surface areas of the hollow fibers, and represented by: (outer circumference of hollow fibers) $\times$ (length from adhesive layer to adhesive layer of the module) $\times$ (number of hollow fiber membranes). The membrane area of the forward osmosis membrane module can be measured by the method described under the "EXAMPLES", and it may be considered to be roughly equivalent to the effective membrane area of the support membrane module.

The hollow fiber membrane module 1 also preferably comprises a conduit that communicates with the inside (hollow sections) but does not communicate with the outside of the hollow fiber bundle, and a conduit that communicates with the outside but does not communicate with the inside of the hollow fiber bundle. With such a configuration it is possible to set the inside and outside of the hollow fiber bundle at different pressures, which is suitable for use in forming the separation function layer for the embodiment as described below.

The separation function layer is disposed on the porous support of the support membrane and essentially performs the separation function for solutes in the forward osmosis membrane, and more specifically, it performs the function of separating solutes such as dissolved ions from the solvent in the feed solution.

The separation function layer of the embodiment has an average thickness of 2.0 $\mu$m or smaller and a coefficient of variation of 30% or lower for the average thickness in the radial direction and lengthwise direction of the forward osmosis membrane module, thus allowing both performance stability and physical durability to be achieved. From the viewpoint of ensuring a thickness that will prevent defects in the separation function layer, the average thickness of the separation function layer is preferably 0.05 $\mu$m or greater, while from the viewpoint of achieving both water permeability and a thickness that inhibits defects, it is more preferably 0.2 to 0.8 $\mu$m. From the viewpoint of further improving the physical durability of the forward osmosis membrane module, the coefficient of variation in the average thickness of the separation function layer is preferably 25% or lower and more preferably 20% or lower. If the coefficient of variation in the average thickness of the separation function layer is within this numerical range, it will be possible to evenly disperse pressure, even when back pressure has been applied to the forward osmosis membrane module, thus helping to prevent detachment of and damage to the separation function layer.

For the purpose of the present specification, the coefficient of variation represents variation in the average thickness of the separation function layer for each hollow fiber forward osmosis membrane in the forward osmosis membrane module. The coefficient of variation is the value of the standard deviation for the average thickness, divided by the average for the average thicknesses, expressed as a percentage (%).

The average thickness of the separation function layer is measured by microscopic observation. Specifically, the separating membrane is embedded in a resin and sliced to prepare an ultrathin section, for example. The obtained slice is treated by dyeing, for example, and observed with a transmission electron microscope (TEM) or scanning electron microscope (SEM). A preferred method for measuring the membrane thickness is a method in which an image of a cross-section taken in the thickness direction of the separation function layer using a scanning electron microscope is loaded into appropriate image processing software and processed. The image processing software used may be ImageJ (developed by the U.S. National Institutes of Health), for example. Based on the SEM image loaded into ImageJ, the average thickness of each single separation function layer in a single image is determined by extracting the outline of the separation function layer, filling in the interior and calculating the area of the separation function layer, converting to average thickness against a previously drawn calibration curve.

According to the embodiment, the following is the preferred method for measuring the coefficient of variation in the average thickness of the separation function layer.

Each hollow fiber membrane is divided into 3 parts in the lengthwise direction to obtain 3 samples. A cross-section perpendicular to the in-plane direction of the membrane (the lengthwise direction) is obtained at arbitrary locations of the three samples, preferably with two divisions in the lengthwise direction of each sample, and each is observed, measuring the average thickness of the separation function layer for the image.

This procedure is carried out for three different forward osmosis membranes, or three forward osmosis membranes cut out from a single forward osmosis membrane module, and the average thickness of the separation function layer is measured for a total of 9 images. The 9 average thickness values are used to calculate the average value for the average thicknesses and the standard deviation in the average thickness, further calculating the coefficient of variation from these values.

When three forward osmosis membranes are cut out from a single forward osmosis membrane module, they are preferably cut out at the three locations: outer periphery, middle part and center section, in the radial direction of the forward osmosis membrane module. This method of cutting out sections allows evaluation of variation in the module as a whole.

In the case of a flat forward osmosis membrane, the membrane is divided into 9 portions to obtain 9 samples, and a cross-section is obtained from the center section of each sample and observed with a microscope.

The visual field of the microscope image used for measurement of the average thickness of the separation function layer is preferably about 5 to 100 $\mu$m, more preferably 5 to 50 $\mu$m, even more preferably 5 to 20 $\mu$m and most preferably 13 $\mu$m, as the width of the cross-section (the length in the direction parallel to the direction of the interface between the support membrane and the separation function layer). The magnification of the microscope image is preferably 5,000x to 30,000x, and more preferably 10,000x.

The forward osmosis membrane of the embodiment preferably has a support membrane and separation function layer structure with uniformity within this range. If the structures of the separation function layer and of the support membrane near the separation function layer are uniform, it will be possible to exhibit the desired function and physical durability at any arbitrary part of the separation function layer. Defects occurring in any of the forward osmosis membranes of a forward osmosis membrane module generally result in significantly lower performance of the module as a whole. For this reason as well it is preferred for the forward osmosis membranes to be uniform throughout the module.

In the case of hollow fiber forward osmosis membranes, for example, the structure of each forward osmosis membrane is preferably uniform in either or both the circumferential direction and lengthwise direction, more preferably being uniform in both the circumferential direction and lengthwise direction, and most preferably being uniform for the membranes at all sections when the hollow fibers are bundled in a module.

According to the embodiment, the coefficient of variation in the average thickness of the separation function layer from the outermost periphery through to the center section of each hollow fiber in the forward osmosis membrane module comprising the plurality of hollow fiber forward osmosis membranes, and the coefficient of variation in the average thickness of the separation function layer from one end to the other end of the hollow fibers in the module, are each preferably 0 to 30%, more preferably 25% or lower and even more preferably 0 to 20%.

More specifically, the separation function layer thickness, average thickness and coefficient of variation may be obtained by the methods described below under the "EXAMPLES". The forward osmosis membrane module comprising the plurality of hollow fiber forward osmosis membranes according to the embodiment has low variation in average thickness of the separation function layers at different sections of the module. The variation between modules is therefore satisfactorily low. The "performance" referred to here is physical durability, permeation volume and salt back diffusion.

The separation function layer of the embodiment has essential separation performance, may be composed of a macromolecular polymer, has small thickness, and can be formed by interfacial polymerization reaction.

When the separation function layer is a membrane composed of a macromolecular polymer, the membrane thickness is preferably as thin as possible without pinholes. However, the thickness must be suitably large to maintain mechanical strength and chemical resistance. In consideration of membrane formation stability and permeability, therefore, the thickness of a membrane composed of a macromolecular polymer is preferably 0.2 to 2.0 $\mu$m, more preferably 0.2 to 1.0 $\mu$m and even more preferably 0.2 to 0.8 $\mu$m.

A preferred example for the macromolecular polymer is a macromolecular polymer of:

one or more first monomers selected from among polyfunctional amines, and
one or more second monomers selected from the group consisting of polyfunctional acid halides. More specific compounds are:
polyamides obtained by interfacial polycondensation reaction between a polyfunctional amine and a polyfunctional acid halide. When the separation function layer is a membrane comprising such a macromolecular polymer or a membrane consisting of such a macromolecular polymer, the separation performance is the performance for separation of purified water and solutes such as ions that are dissolved in it.

The types of first monomer and second monomer, their combinations and the type of solvent used are not particularly restricted so long as the monomers immediately undergo polymerization reaction at their interface to form a macromolecular polymer. However, either or both the first monomer and second monomer preferably include a reactive compound with 3 or more reactive groups. This will lead to formation of a thin-membrane composed of a three-dimensional macromolecular polymer, which is more preferable from the viewpoint of membrane strength.

The polyfunctional amine may be a polyfunctional aromatic amine, a polyfunctional aliphatic amine or a monomer with multiple reactive amino groups, or a prepolymer of the same.

A polyfunctional aromatic amine is an aromatic amine compound with two or more amino groups in the molecule, specific examples of which include *m*-phenylenediamine, *p*-phenylenediamine, 3,3'-diaminodiphenylmethane, 4,4'-diaminodiphenylamine, 4,4'-diaminodiphenyl ether, 3,4'-diaminodiphenyl ether, 3,3'-diaminodiphenylamine, 3,5-diaminobenzoic acid, 4,4'-diaminodiphenylsulfone, 3,3'-diaminodiphenylsulfone, 3,4'-diaminodiphenylsulfone, 1,3,5,-triaminobenzene and 1,5-diaminonaphthalene, which may be used alone or in combined mixtures. According to the invention it is particularly preferred to use either or both *m*-phenylenediamine and *p*-phenylenediamine.

A polyfunctional aliphatic amine is an aliphatic amine compound having two or more amino groups in the molecule, specific examples of which include:

primary amines with cyclohexane rings, such as 1,3-diaminocyclohexane, 1,4-diaminocyclohexane, 4,4'-bis(paraaminocyclohexyl)methane, 1,3-bis(aminomethyl)cyclohexane, 2,4-bis(aminomethyl)cyclohexane and 1,3,5-triaminocyclohexane;
secondary amines with piperazine rings, such as piperazine, 2-methylpiperazine, ethylpiperazine and 2,5-dimethylpiperazine;
secondary amines with piperidine rings, such as 1,3-bis(4-piperidyl)methane, 1,3-bis(4-piperidyl)propane and 4,4'-bipiperidine;
amines with both a primary and a secondary amino group, such as 4-(aminomethyl)piperidine; and
ethylenediamine, propylenediamine, 1,2-propanediamine, 1,2-diamino-2-methylpropane, 2,2-dimethyl-1,3-propanediamine, tris(2-aminoethyl)amine, N,N'-dimethylethylenediamine and N,N'-dimethylpropanediamine, any of which may be used alone or in combined mixtures. Mixtures of the aforementioned polyfunctional aliphatic amines with the aforementioned polyfunctional aromatic amines may also be used.

Examples of monomers with a plurality of reactive amino groups include polyethyleneimine, amine-modified polyepichlorhydrin and aminated polystyrenes. Examples of the aforementioned prepolymers that are suitable for use include one or more prepolymers selected from among piperazine, 4-(aminomethyl)piperidine, ethylenediamine and 1,2-diamino-2-methylpropane.

Examples of polyfunctional halides include polyfunctional aromatic acid halides and polyfunctional aliphatic acid halides. They must be at least bifunctional so as to react with the polyfunctional amine to form a macromolecular polymer.

A polyfunctional aromatic acid halide is an aromatic acid halide compound having two or more acid halide groups in the molecule. Specific examples include trimesoyl halides, trimellitoyl halides, isophthaloyl halides, terephthaloyl halides, pyromellitoyl halides, benzophenonetetracarboxylic acid halides, biphenyldicarboxylic acid halides, naphthalenedicarboxylic acid halides, pyridinedicarboxylic acid halides and benzenedisulfonic acid halides, any one of which may be used alone or in admixture. According to the embodiment it is particularly preferred to use trimesoyl chloride alone, or a mixture of trimesoyl chloride and isophthaloyl chloride, or a mixture of trimesoyl chloride and terephthaloyl chloride.

A polyfunctional aliphatic acid halide is an aliphatic acid halide compound having two or more acid halide groups in the molecule. Specific examples include alicyclic polyfunctional acid halide compounds such as cyclobutanedicarboxylic acid halides, cyclopentanedicarboxylic acid halides, cyclopentanetricarboxylic acid halides, cyclopentanetetracarboxylic acid halides, cyclohexanedicarboxylic acid halides and cyclohexanetricarboxylic acid halides; as well as propanetricarboxylic acid halides, butanetricarboxylic acid halides, pentanetricarboxylic acid halides, succinoyl halides and glutaroyl halides. These may be used alone or as mixtures, and the polyfunctional aliphatic halides may also be used in admixture with the aforementioned polyfunctional aromatic acid halides.

Examples of polyfunctional isocyanates include ethylene diisocyanate, propylene diisocyanate, benzene diisocyanate, toluene diisocyanate, naphthalene diisocyanate and methylenebis(4-phenylisocyanate).

The first monomer and second monomer are each supplied for interfacial polymerization as a solution with an appropriate solvent.

As used herein, the first solution is a solution containing the monomer that is to contact first with the hollow fiber support membrane, and the second solution is a solution containing the monomer that is to contact with the support membrane that has previously contacted with the first solution, reacting with the monomer in the first solution to form a macromolecular polymer. Either the first monomer or the second monomer is present in the first solution, while the other is present in the second solution. Either monomer may be used in either solution, but preferably both monomers are not present in the same solution.

The solvent for the first solution and the solvent for the second solution are not particularly restricted so long as they dissolve their respective monomers, forming a solution-solution interface where they mutually contact, and also do not damage the microporous hollow fiber support membrane. Examples of such solvents include, as the solvent for the first solution, either one or a mixture of both water and alcohol, and as the solvent for the second solution, one or a mixture of hydrocarbon-based solvents such as *n*-hexane, cyclohexane, *n*-heptane, *n*-octane, *n*-nonane and *n*-decane. Selection of such solvents will ensure that the first solution and second solution are immiscible and that interfacial polymerization will proceed as expected.

Preferably the first monomer is selected as the monomer in the first solution and the second monomer is selected as the monomer in the second solution. The concentrations of the reactive compounds in the first solution and second solution are not particularly restricted as they will depend on the types of monomers and their distribution coefficients in the solvents, and should be appropriately set be a person skilled in the art.

For example, if an aqueous *m*-phenylenediamine solution is used as the first solution and an *n*-hexane solution of trimesoyl chloride is used as the second solution, the *m*-phenylenediamine concentration is preferably 0.1 to 10% by weight and more preferably 0.5 to 5% by weight. The concentration of the trimesoyl chloride is preferably 0.01 to 10% by weight and more preferably 0.1 to 5% by weight. If the solution concentrations are too low, formation of the thin-membrane by interfacial polymerization will be incomplete, resulting in defects and tending to lower the separation performance. If they are too high, on the other hand, the resulting thin-membrane will be too thick leading to reduced permeability and also potentially increasing the residual unreacted substances in the membrane and producing an adverse effect on membrane performance.

When acid is generated as the interfacial polymerization reaction progresses, an alkali may be added as an acid scavenger to either the first solution or second solution, or to both. A surfactant for improved wettability with the microporous hollow fiber support membrane, or a catalyst for accelerated reaction, may also be added as necessary.

Examples of acid scavengers include:

caustic alkalis such as sodium hydroxide;
sodium phosphates such as trisodium phosphate;
sodium carbonates such as sodium carbonate; and

tertiary amines such as trimethylamine, triethylamine and triethylenediamine. Examples of surfactants include sodium lauryl sulfonate and sodium lauryl benzenesulfonate. Dimethylformamide is an example of a catalyst. These may be added beforehand to either or both the first solution and second solution.

Throughout the present specification, the space inside of the hollow fibers will be referred to as the "inside" while the space between the outside of the hollow fibers and the tube will be referred to as the "outside". The composite hollow fiber membrane module of the embodiment has a structure in which liquid flowing on the inside and liquid flowing on the outside contact only through the hollow fiber membranes. As shown in Fig. 1, differential pressure is applied to the outer conduits 2 and 3 and the inner conduits 9, 10, thus allowing a pressure difference to be created between the inside and outside of the hollow fibers.

According to the embodiment, a first solution that comprises either one of the first monomer and second monomer is packed in the inside of the porous hollow fiber support membrane module, and then a pressure difference is created between the inside and outside, after which a second solution that comprises the other of the first monomer or second monomer and is immiscible with the first solution is passed through, reacting the first monomer and second monomer on the inner surface of the porous hollow fiber support membrane to form a thin-membrane composed of a macromolecular polymer or a thin-membrane including a macromolecular polymer, to produce the desired forward osmosis membrane module.

The method of creating the pressure difference between the inside and outside may be any method selected from among the following, for example:

a method of pressure reduction on both the inside and outside;
a method of pressure reduction on the outside and atmospheric pressure on the inside;
a method of atmospheric pressure on the outside and pressurization on the inside; and
a method of pressurization on both the inside and outside. For the embodiment, the pressure on the outside is preferably set to be lower than the inside.

After the first solution has been filled into the inside, a pressure difference is created as described above (inside pressure > outside pressure) to cause the excess first solution to infiltrate into the micropores of the support membrane, whereby a thin-membrane of the first solution is formed with a relatively uniform thickness on the inner surface of the support membrane, over the entire module.

For the embodiment, the thickness of the membrane composed of the macromolecular polymer as the separation function layer formed on the inner surface of the microporous hollow fiber support membrane of the composite hollow fiber module is closely related to the thickness of the liquid membrane of the first solution. The liquid membrane thickness can be adjusted by changing the pressure difference between the inside and outside of the module, the time for which the pressure difference is maintained, the amount of surfactant added to the first solution, and the structure of the support membrane. In this regard, the separation function layer thickness, average thickness and coefficient of variation of the average thickness are preferably adjusted as described above. In order to form a separation function layer with adjusted average thickness and coefficient of variation thereof, the pressure difference between the inside and outside is preferably 1 to 500 kPa, more preferably 5 to 300 kPa and even more preferably 10 to 100 kPa. The time for which the pressure difference is maintained is preferably 1 to 100 minutes and more preferably 10 to 50 minutes. The amount of surfactant added to the first solution is preferably 0.01 to 1 weight% and more preferably 0.05 to 0.5 weight%, with respect to the total amount of the first solution.

A larger pressure difference and a longer time for maintaining the pressure difference will result in a smaller thickness of the liquid membrane of the first solution, or a larger thickness in the opposite case. If the thickness of the liquid membrane is too small, slight variations in the membrane thickness will create sections without liquid membrane formation, resulting in defects in the separation function layer. If the thickness of the liquid membrane is too large it may not be possible to obtain sufficient permeability.

In the method of producing the forward osmosis composite hollow fiber membrane module of the embodiment, the pressure difference formed between the inside and outside is uniform from the outermost periphery across the center section of the hollow fibers in the module, and is also uniform from one of the ends across to the other end of the hollow fibers in the module. The thickness of the liquid membrane of the first solution formed at each location is therefore uniform, and the thickness of the separation function layer of the macromolecular polymer formed from it is also uniform. This results in low variation in the water permeation volume of liquid at different sections, allowing more stable high performance to be exhibited as a composite hollow fiber membrane module.

In prior art methods for forming a liquid membrane of a first solution on the inside of hollow fibers through high pressure air, a longer module length and a larger module diameter results in greater variation in the average thickness of the separation function layer at each of the locations mentioned above. In contrast, with the method for producing a forward osmosis membrane module of the embodiment, the average thickness of the separation function layer is essentially uniform at each location. Moreover, the effect of the invention is exhibited more notably with a larger module size, and it is advantageous in practical terms to have a module length of 50 mm to 3000 mm and a module diameter of 50 mm to 500 mm, though this is not limitative.

The separation function layer in the forward osmosis membrane module of the embodiment has a plurality of fine irregularities on the surface. The extent of irregularities on the separation function layer surface can be estimated based on the ratio L2/L1 between the length L2 of the separation function layer surface and the length L1 of the interface between the separation function layer and the hollow fiber support membrane, in a scanning electron microscope image taken of a cross-section of the separation function layer in the thickness direction. The ratio L2/L1 for the composite hollow fiber membrane module of the embodiment based on a cross-sectional image of the separation function layer is preferably 1.1 to 5.0, more preferably 1.15 to 4.0 and even more preferably 1.2 to 3.0. The ratio L2/L1 can be evaluated using a scanning electron microscope image of a cross-section of a hollow fiber membrane sample.

The present inventors have surmised that the following mechanism is the mechanism by which the surface of the separation function layer of the embodiment forms such a fine irregular structure. However, the present invention is not to be constrained by the theory explained below.

The separation function layer in the composite hollow fiber membrane module of the embodiment is preferably formed by interfacial polymerization. In interfacial polymerization, it is thought that the liquid membrane of the first monomer solution formed on the hollow fiber surface forms a polymerization layer as polymerization at the interface proceeds without miscibility when it contacts with the second monomer solution. As a result, the separation function layer that is formed is thought to have a form with numerous microirregularities on the surface. When the separation function layer is formed by a method other than interfacial polymerization it is difficult to form a separation function layer with numerous surface microirregularities.

(Irregular structure of separation function layer)

The separation function layer in the forward osmosis membrane of the embodiment preferably has an irregular structure with an arithmetic mean height (Sa) of 40 nm or greater.

That the separation function layer has an "irregular structure" means that the outermost surface of the separation function layer, i.e. the side of the separation function layer opposite from the side that contacts with the support membrane, has numerous heights and recesses in a repeating manner. That the arithmetic mean height (Sa) of the irregular structure is 40 nm or greater means that when the surface roughness of the outermost surface of the separation function layer is measured, the arithmetic mean height (Sa) as defined according to ISO 25178 is 40 nm or greater.

The arithmetic mean height (Sa) of the irregular structure of the separation function layer is preferably 60 nm or greater and more preferably 100 nm or greater from the viewpoint of ensuring water permeability while increasing adhesiveness with the porous support. During practical use, substances that become caught in the irregular structure of the separation function layer and adhere to the membrane surface can potentially contaminate it, depending on the quality of the liquid caused to permeate through the forward osmosis membrane. From the viewpoint of reducing adhering substances in such cases, the arithmetic mean height (Sa) of the separation function layer is preferably 300 nm or smaller, more preferably 200 nm or smaller and even more preferably 150 nm or smaller.

The arithmetic mean height (Sa) of the irregular structure of the separation function layer can be analyzed using an atomic force microscope (AFM).

Specifically, AFM observation is carried out using an observation sample where the surface of the separation function layer is exposed, under conditions in which the forward osmosis membrane does not dry. An example of the measuring conditions is as follows.

Measuring mode: QNM in fluid (in purified water)
Visual field size: 3 $\mu m^2$
Probe: OLTESPA

Under these conditions, for example, the outermost surface of the separation function layer is scanned to measure the arithmetic mean height (Sa), and evaluation is based on the average value for 9 samples.

<Method for producing forward osmosis membrane module>

The method for producing a forward osmosis membrane module of the embodiment includes the following steps, for example:

(I) a separation function layer-forming step in which a plurality of hollow fiber support membranes each with a porous support are used, forming a separation function layer on the surface of each hollow fiber support membrane to fabricate a hollow fiber forward osmosis membrane module comprising hollow fiber forward osmosis membranes,
(II) a liquid-encapsulating step in which a liquid is encapsulated and held in the hollow fiber forward osmosis membrane module, at least on the separation function layer-forming surface side, and
(III) a heat treatment step in which the hollow fiber forward osmosis membrane module and the liquid are heated to 50°C or higher.

If the method for producing a forward osmosis membrane module includes the separation function layer-forming step (I), the liquid-encapsulating step (II) and the heat treatment step (III), the obtained forward osmosis membrane module will exhibit stable high performance and will tend to have excellent physical durability, especially with high back pressure resistance as explained above.

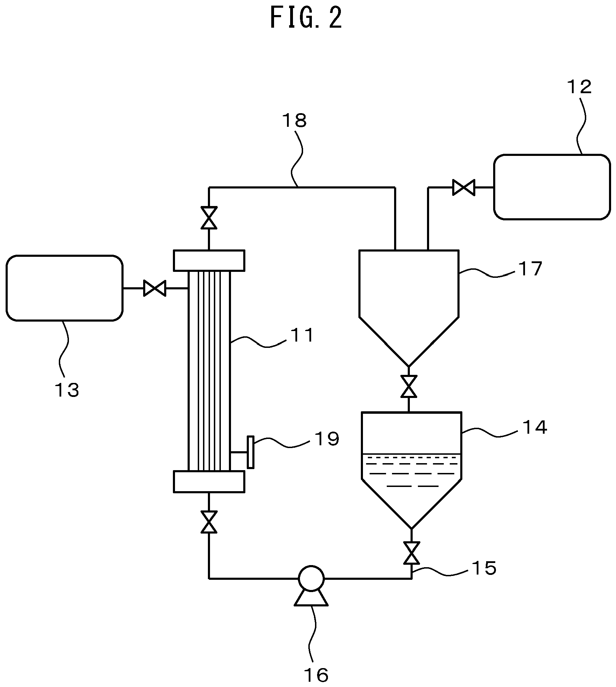

The method for producing the forward osmosis membrane module of the embodiment and each of its steps will now be explained with reference to Fig. 2.

In the apparatus shown in Fig. 2, on the inside of a porous hollow fiber support membrane module 11 having the first solution filled into the inside of the hollow fiber support membrane, tubing from a second solution storage tank 14 is connected to the inlet on the inside, with a pump 16 that pumps the second solution being connected in the line. Tubing 18 is connected from a reaction effluent storage tank 17 to an outlet on the inside, with an inside pressure control device 12 being connected from the tank to control the pressure inside the hollow fibers of the porous hollow fiber support membrane module 11. An end cap 19 is fitted onto a lower conduit on the outside of the porous hollow fiber support membrane module 11, while an outside pressure control device 13 that controls the outside pressure is connected into an upper conduit.

The membrane area of the porous hollow fiber support membrane module 11 is preferably 0.1 $m^2$ or greater from the viewpoint of adjusting the membrane area of the obtained forward osmosis membrane module to the numerical range specified above.

In the separation function layer-forming step (I), the separation function layer is provided on the surface of the hollow fiber support membrane, and the hollow fiber support membrane is preferably constructed with a dense layer having a void percentage of 40% or lower at a location up to 1.0 $\mu$m in the depthwise direction from the interface between the porous support and the separation function layer, the void percentage of the dense layer being more preferably 10 to 40%. By constructing the hollow fiber support membrane and separation function layer in this manner, it is possible to achieve both physical durability and performance stability for the obtained forward osmosis membrane module.

The material of the porous support composing the hollow fiber support membrane and the material of the separation function layer are as explained above. From the viewpoint of lowering the coefficient of variation in the average thickness of the separation function layer, producing a more uniform structure for the module overall and increasing the forward osmosis performance, back pressure resistance and practical utility, the separation function layer is preferably formed using a macromolecular polymer of at least one first monomer selected from among polyfunctional amines and at least one second monomer selected from among polyfunctional acid halides. From the same viewpoint, more preferably the liquid membrane of the first solution comprising either one of the first monomer and second monomer is formed on the inner surface of the hollow fiber support membrane, and then a pressure difference is created between the inside and outside of the hollow fiber support membrane such that (inside pressure) > (outside pressure), after which the second solution comprising the other of the first monomer and second monomer is contacted with the liquid membrane of the first solution.

From the viewpoint of practical utility and productivity and the viewpoint of inhibiting defects in the membrane or module, preferably the pressure difference is in the range of 10 to 90 kPa, and/or preferably the pressure difference is produced by either of the following two methods:

(Ia) pressure reduction on the outside of the hollow fiber support membrane; or
(Ib) pressurization of the outside and inside of the hollow fiber support membrane to respectively different pressures.

In the liquid-encapsulating step (II), the liquid is encapsulated and held on at least the separation function layer-forming surface side of the hollow fiber forward osmosis membrane module, while preferably, from the viewpoint of uniform heating and cooling, the liquid enters through and is held on the insides and outsides of the hollow fiber forward osmosis membranes, and more preferably, from the viewpoint of uniform heating and cooling and the viewpoint of filling the liquid at the membrane thickness sections, the liquid fills the hollow fiber forward osmosis membrane and is held by pressurization of the liquid. The liquid used is preferably water, such as purified water, in consideration of the subsequent washing step.

In the liquid-encapsulating step (II), the hollow fiber forward osmosis membrane module is preferably immersed in a liquid such as water, from the viewpoint of avoiding deformation of the housing when the entire module is heated for heat sterilization after being set in an apparatus, or preferably encapsulates a liquid such as water from the viewpoint of conservation of the liquid, and economy. The liquid-encapsulating step (II) may be carried out, for example, by passing a liquid through a liquid tank, or by immersing the module in a liquid tank (such as a water tank).

In the heat treatment step (III), temperatures of the forward osmosis membrane module and the liquid such as water are raised to 50°C or higher, preferably 100°C or higher, from the viewpoint of increasing the forward osmosis performance, and more preferably 121°C or higher, from the viewpoint of further increasing the forward osmosis performance. The upper limit for the raising temperature for the module and liquid may be 145°C or lower, for example, as a temperature range in which the members do not dissolve. The heat treatment step (III) may be carried out in a high-pressure steam sterilizer (autoclave), for example. Heating after encapsulation of the liquid allows the effect of improved forward osmosis membrane performance by heat treatment to be obtained while preventing drastic deformation of the forward osmosis membranes and/or forward osmosis membrane module.

From the viewpoint of inhibition or prevention of sudden boiling, and the viewpoint of inhibiting membrane defects, the heating in the heat treatment step (III) is preferably continued under pressure in a temperature range above the boiling point of the liquid, such as water. The pressurization in the heat treatment step (III) may be carried out by continuing the pressurization described in (Ib) above, for example.

When the heat treatment step (III) is carried out after some of the forward osmosis membranes are in contact with the liquid, or preferably at least 40% or at least 80% of the surface area of all of the forward osmosis membranes is in contact with the liquid, or more preferably 80 to 100% of the surface area of all of the forward osmosis membrane is in contact with the liquid, in the liquid-encapsulating step (II), then it will be possible to prevent excessive evaporation of the liquid from the forward osmosis membrane when the forward osmosis membrane is cooled after the heat treatment step (III). This can prevent drying of the pores of the support membrane and/or separation function layer in each of the forward osmosis membranes, thus helping to maintain high water permeability for the forward osmosis membranes. When the liquid is encapsulated in the membrane module, this will lead to uniform heating and cooling of the membrane module as a whole, resulting in a more uniform separation function layer being obtained.

An example of the method for producing a forward osmosis membrane module that includes steps (I) to (III) may be carried out by the following procedure.

First, each of the tubes are connected to the porous hollow fiber support membrane module 11 having the first solution filling the porous insides of the hollow fiber support membranes. Next, a pressure difference is created between the inside and outside (that is, on the insides and outsides of the hollow fiber support membranes) (inside pressure > outside pressure), using the inside pressure control device 12 and outside pressure control device 13. During this step, the excess first solution in the hollow fibers on the inside enter the fine pores due to the pressure difference (often even seeping out to the outside), forming a liquid membrane of uniform thickness on the inside of the hollow fibers.

The second solution in the storage tank 14 is then conveyed inside the hollow fibers using a pump and contacted with the liquid membrane of the first solution. The contact results in interfacial polymerization between the two monomers, forming a thin-membrane of the macromolecular polymer created as a separation function layer on the porous inside of each porous hollow fiber support membrane. While the second solution is being conveyed it is potentially possible for the pressure on the inside to fluctuate, but the function of the inside pressure control device 12 can reduce such pressure fluctuation. When interfacial polymerization is carried out, therefore, it is preferred to maintain the previously set pressure difference between the inside and outside.

Interfacial polymerization between the first monomer and second monomer in this manner forms a thin membrane of the macromolecular polymer on the inside of each porous hollow fiber support membrane, producing a forward osmosis membrane module of the embodiment.

The forward osmosis membrane module of the embodiment has a layer composed of the macromolecular polymer which is uniform across the entire module, since the liquid membrane thickness of the first monomer solution used to form the macromolecular polymer by interfacial polymerization is uniform throughout the outer periphery and center section of the module, as well as the top and bottom of the module. The interfacial polymerization proceeds at the interface between the first monomer solution and second monomer solution, thus forming numerous microirregularities on the surface of the layer formed from the macromolecular polymer.

The forward osmosis membrane module also encapsulates and holds the liquid at least on the separation function layer-forming surface side, for supply to the liquid-encapsulating step (II).

The forward osmosis membrane module is further heated to 50°C or higher together with the encapsulated liquid, which is then supplied to the heat treatment step (III).

The forward osmosis membrane module obtained by this production method has its membrane area adjusted to 0.1 m$^2$ or greater as described above.

EXAMPLES

The invention will now be explained in detail through the following Examples, with the understanding that these Examples are not limitative on the invention. The procedure was carried out at 25°C, unless otherwise specified.

<Electron microscope observation, measurement of dense layer void percentage, measurement of average thickness and coefficient of variation of separation function layer, and measurement of membrane area of porous hollow fiber support membrane module>

Porous hollow fiber support membrane modules or hollow fiber forward osmosis membrane modules were disassembled, taking one hollow fiber as a sample from each of 3 locations: the center, a location at 50% of the radius and the outermost periphery, in the radial direction of the module. Each hollow fiber was divided into 3 parts in the lengthwise direction to obtain 9 samples. The hollow fiber samples were each treated by the method described below to prepare hollow fiber cross-section samples.

Cross-sectional samples were prepared from samples at 9 locations, dividing the flat membrane forward osmosis membrane into 3 equal portions on each side of the forward osmosis membrane to a total of 9 portions.

Each sample was photographed near the interface of contact between the porous support and separation function layer using a scanning electron microscope, and the obtained image (cross-sectional image) was analyzed, identifying the dense layer of the porous support in the support membrane, and the portions other than the dense layer, to determine the locations of the dense layer and the void percentage.

The thickness of the dense layer of the porous support membrane, and the void percentage, were measured after formation of the forward osmosis membrane. The measured values for the support membrane alone were also confirmed to be the same, within the margin of error.

The cross-sectional image of each sample was obtained in the following manner.

The sample in a specialized glass container was immersed in purified water and frozen using liquid nitrogen, after which it was dried by a freeze-drying method. Using the dried sample in Broad Ion Beam (BIB) processing (processing apparatus: E-3500, Hitachi High-Technologies Corp.), a cross-section perpendicular to the in-plane direction of the membrane was prepared, thinly coated with osmium, and used as an observation sample. A scanning electron microscope (S-4800, Hitachi High-Technologies Corp.) was used to photograph the observation sample under the following conditions.

Acceleration voltage: 1.0 kV
Emission current: 10 $\mu$A
Probe current: Normal
Detector: Upper
Magnification: 10,000x (for calculation of average thickness and coefficient of variation of separation function layer), or 50,000x (for calculation of void percentage of dense layer)
Pixel count: 1280 $\times$ 960
Working distance: 5.0 mm
Image processing software: ImageJ (developed by the U.S. National Institutes of Health)

The observation field was set so that a region with a width of 13 $\mu$m (for calculation of the average thickness or coefficient of variation of the separation function layer) or 2.5 $\mu$m (for calculation of the void percentage of the dense layer) in the in-plane direction of the membrane sample fit within the visual field. The cross-sectional image was taken as an 8-bit grayscale image under conditions without brightness saturation and with maximum contrast.

Calculation of the void percentage of the dense layer of the porous support and calculation of the average thickness and coefficient of variation of the separation function layer were carried out using image processing software (ImageJ, developed by the U.S. National Institutes of Health).

<Average thickness and coefficient of variation of separation function layer>

The cross-sectional image was loaded into image processing software and binarized by Otsu's method, the borders of the separation function layer were extracted, the interiors were shaded, and the area of the separation function layer in the cross-sectional image was calculated. The obtained area value was converted to average thickness of the separation function layer per image, using a previously drawn calibration curve. The average for the nine samples was recorded as the average thickness of the separation function layer, and the standard deviation and coefficient of variation were calculated.

<Calculation of void percentage of dense layer>

The cross-sectional image was loaded into image processing software and binarized by Otsu's method, and the void percentage (units: %) was calculated as the percentage of the area of the voids divided by the remaining area, in a range up to 1.0 $\mu$m in the depthwise direction from the interface between the porous support and the separation function layer. The threshold for binarization was determined automatically, but when the sections with macro-voids could not be properly binarized, image processing was carried out after black shading of the macro-void sections of the cross-sectional image.

The average value for the 9 samples was recorded as the void percentage up to 1.0 μm in the depthwise direction from the interface between the porous support and the separation function layer.

<Thickness of dense layer incorporating separation function layer>

The image used for calculation of the void percentage of the dense layer was used to estimate the thickness of the dense layer into which the separation function layer was incorporated in the depthwise direction from the interface between the porous support and the separation function layer.

For all of the Examples and Comparative Examples, when the separation function layer was visible with the naked eye, the length from the contact interface between the porous support and separation function layer of the forward osmosis membrane to the edge of incorporation of the separation function layer was used as the thickness of the dense layer into which the separation function layer was incorporated. As a result, dense layers incorporating separation function layers were observed with thicknesses of 50 nm or greater in all of Examples 1 to 11 and Comparative Examples 1 to 6. In Example 1, the maximum thickness was 120 nm.

Furthermore, even when observing the region in the scanning electron microscope image up to 1.0 μm in the depthwise direction from the contact interface between the dense layer and the separation function layer, dividing the depthwise direction into 20 portions of 0.05 μm each and using the length from the edge of the divided dense layer in the depthwise direction up to the contact interface between the porous support and the separation function layer as the thickness of the region of the dense layer incorporating the separation function layer, in the divided dense layer up to the point where the void percentage of each dense layer that was divided into 20 portions (the divided dense layer) was at least 0.25 times the void percentage up to 1.0 μm, dense layers incorporating separation function layers were still observed with thicknesses of 50 nm or greater in all of Examples 1 to 11 and Comparative Examples 1 to 6.

[Irregular structure of separation function layer]

The arithmetic mean height (Sa) of the irregular structure of the separation function layer was analyzed by the following method using an atomic force microscope (AFM).

In the case of a hollow fiber forward osmosis membrane, 9 samples were obtained under conditions with the membrane wetted by purified water, taking one forward osmosis membrane each from 3 locations: the outer periphery, the middle and the center section in the radial direction of the forward osmosis membrane module (total of 3), and dividing each into 3 equal parts in the lengthwise direction. The center section of each sample was cut open obliquely to expose the surface of the separation function layer, and the obtained separation function layer surface was observed.

For a flat forward osmosis membrane, samples were obtained at 9 locations, dividing the forward osmosis membrane into 9 portions with 3 equal portions on each side. The separation function layer surface at the center section of each sample was also observed.

In either case, with a hollow fiber forward osmosis membrane or with a flat forward osmosis membrane, the measured value was calculated as the average value for 9 samples. An atomic force microscope was used for observation under the following conditions and calculation of the arithmetic mean height.

Measuring mode: QNM in fluid (in purified water)
Visual field size: 3 μm$^2$
Probe: OLTESPA

When the arithmetic mean height (Sa) calculated as the average value for 9 samples was 40 nm or greater, the separation function layer was considered to have an irregular structure, and when the arithmetic mean height (Sa) was less than 40 nm, the separation function layer was considered not to have an irregular structure. The forward osmosis membranes in the Examples and Comparative Examples all had irregular structures.

[Dimensions of support membrane]

The dimensions of the support membrane were measured as the inner diameter, outer diameter and membrane thickness, for a hollow fiber support membrane, and the membrane thickness, for a flat support membrane.

For a hollow fiber support membrane, measurement was carried out using an optical microscope photograph (cross-sectional image) of a cross-section obtained by cutting on a plane perpendicular to the membrane in-plane direction (lengthwise direction). The outer diameter and inner diameter of the cross-sectional image were measured using a scale. The difference between the outer diameter and inner diameter was divided by 2 to calculate the membrane thickness. The outer diameter and inner diameter referred to here are the hollow fiber outer diameter and inner diameter, respectively.

For a flat support membrane, measurement was carried out using an optical microscope photograph (cross-sectional image) of a cross-section obtained by cutting on a plane perpendicular to the membrane in-plane direction. The membrane thickness of the cross-sectional image was measured using a scale.

For these Examples, the inner diameter, outer diameter and membrane thickness of the support membrane were measured after formation into a forward osmosis membrane. The measurement results for the support membrane alone were also confirmed to be the same, within the margin of error.

<Evaluation after DS pressure fluctuation test (0 kPa ←→ 100 kPa)>

First, there were prepared a feed solution (FS) tank and a feed solution line connecting the feed solution tank to the forward osmosis membrane module. A pump was installed in the feed solution line to supply the feed solution to the forward osmosis membrane module fabricated in each of the Examples and Comparative Examples, from the feed solution tank. There were also prepared a draw solution (DS) tank and a draw solution line connecting the draw solution tank to the forward osmosis membrane module. A balance was installed under each tank. A pump was also installed in the draw solution line to supply the draw solution from the draw solution tank to the forward osmosis membrane module. In the feed solution and draw solution lines there were installed back pressure valves for physical pressurization of the feed solution and draw solution to adjust the physical pressure difference between the feed solution and draw solution. Also installed in the feed solution and draw solution lines were a pressure sensor for measurement of the physical pressure of the feed solution and draw solution. A motor was further connected, for rotation of the back pressure valves to control the back pressure valves.

The forward osmosis membrane modules fabricated in the Examples and Comparative Examples were subjected to a pressure fluctuation test during forward osmosis treatment under the following conditions, and were then evaluated for forward osmosis membrane performance, determining the water permeability (Flux) and salt back diffusion (RSF), and calculating the salt permeability (RSF/Flux).

Pressure fluctuation test

Feed solution: purified water, 25°C, membrane-surface linear speed: about 3.0 cm/sec
Draw solution: 3.5 mass% aqueous sodium chloride solution, 25°C, membrane surface linear speed: about 3.0 cm/sec
Physical pressure difference: 100 kPa (0 kPa ←→ 100 kPa), with repeated opening and closing of the back pressure valve every 5 seconds, for a total of 2,000 times, using the porous support side as the forward side, and with a pressure load of 100 kPa.
Temperature: Pre-adjusted using a double-tube type heat exchanger and temperature control chiller.
Operation time: Forward osmosis treatment was conducted until completion of the pressure load 2,000 times.

Forward osmosis operation was carried out while adding an aqueous saturated sodium chloride solution to the draw solution to maintain a fixed concentration of the draw solution.

Evaluation of forward osmosis membrane performance

The forward osmosis membrane modules subjected to the pressure fluctuation testing were washed with water for 1 hour or longer, and were then evaluated for forward osmosis membrane performance under the following conditions, determining the water permeability (Flux) and salt back diffusion (RSF), and calculating the salt permeability (RSF/Flux).

Feed solution: purified water, 25°C, linear speed: about 3.0 cm/sec
Draw solution: 3.5 mass% aqueous sodium chloride solution, 25°C, linear speed: about 3.0 cm/sec
Transmembrane pressure difference: 20 kPa
Operation time: 1 hour

Forward osmosis operation was carried out while adding an aqueous saturated sodium chloride solution to the draw solution to maintain a fixed concentration of the draw solution.
The transmembrane pressure difference was set by operating the back pressure valve on the draw solution side so that the draw solution side (support membrane side of the forward osmosis membrane) was positive (high-pressure).

Stained location evaluation

Using each forward osmosis membrane module subjected to pressure fluctuation testing, a staining solution comprising blue black (Pilot Co.) diluted 5-fold with pure water (purified water) was passed through only on the separation function layer side, and pressurization of 100 kPa was applied (with high-pressure on the separation function layer side), for a 1-hour staining test. The forward osmosis membrane module was then disassembled and all of the porous support membrane sides of the membranes were observed (the sides opposite from the separation function layers through which the staining solution flowed), evaluating the number of stained locations of 2 mm or greater, on the following scale.

AA: None
A: 1 to 5 locations
B: 6 to 10 locations
C: 10 or more locations

A low number of stained locations indicates less impairment of the function of the separation function layer.

<Example 1>

(Production of porous hollow fiber support membrane)

A homogeneous polymer solution comprising 19 weight% polysulfone (PSf, Udel-P3500 by Solvay Specialty polymers), 61 weight% N-methyl-2-pyrrolidone (FujiFilm-Wako Pure Chemical Industries) and 20 weight% tetraethylene glycol (Tokyo Chemical Industry Co., Ltd.) was prepared as a spinning stock solution. The stock solution was filled into a wet hollow fiber spinning machine equipped with a dual spinneret. The stock solution at 35°C and an internal solidifying solution (water) at 20°C were discharged from the dual spinneret, and after conveying 250 mm in air controlled to 30°C with a relative humidity of 98%, it was coagulated with a coagulating bath (external coagulating solution) filled with water at 30°C, and a free roll was used as the turn roll for wind-up at a tensile force of 25 g to obtain a hollow fiber support membrane.
The outer diameter of the obtained hollow fiber support membrane was 1.02 mm, the inner diameter was 0.62 mm and the membrane thickness was 0.20 mm.

(Fabrication of support membrane module)

After packing 1200 porous hollow fiber support membranes into a cylindrical plastic housing with a diameter of 5 cm and a length of 50 cm, they were anchored with an adhesive and then opened, to fabricate a support membrane module having an effective length of 430 mm and an effective membrane inner surface area of 1.0 m$^2$, as shown in Fig. 1. In the module of Fig. 1, the hollow section of each hollow fiber runs through the adhesive-anchored sections 5, 6, and the hollow section communicates with the outer conduits 9 and 10. The inner conduits 2 and 3, on the other hand, communicate with the spaces on the outsides of the hollow fibers but not with the hollow sections of the hollow fibers. Therefore, application of different pressure or reduced pressure to the outer conduits 9 and 10 and the inner conduits 2 and 3 allows a pressure difference to be created between the insides and outsides of the hollow fibers.

(Formation of separation function layer)

An aqueous solution containing 2 weight% of m-phenylenediamine and 0.15 weight% of sodium lauryl sulfate (first solution) was passed through the inner surface sides of the hollow fibers of the support membrane module for 20 minutes. The liquid was then removed, and the hollow fibers were set in the apparatus shown in Fig. 2 with the insides of the hollow fibers wetted by the first solution.
The inside pressure control device 12 and outside pressure control device 13 were used to adjust the pressure reduction (absolute pressure), setting the inside pressure to 101 kPaA and the outside pressure to 11 kPaA for an internal/external differential pressure of 90 kPa, with the outside at reduced pressure during polymerization.
Air was flowed through for 1 minute at a flow rate of 210 cm/sec to remove the excess first solution. An n-hexane solution comprising 0.23 weight% of 1,3,5-trimesoyl chloride (second solution) was then passed through for 2 minutes for interfacial polymerization, to form a separation function layer on the inner surfaces of the hollow fibers after which nitrogen gas was flowed through for 1 minute at a flow rate of 210 cm/sec to remove the excess n-hexane solution.

Hot water at 45°C was also flowed through the insides of the hollow fibers for 30 minutes at a flow rate of 5 cm/sec, for washing.

Next, the module was placed in an autoclave (indicated as method "AC" in Table 1), while holding the liquid and with the module in an open state, and cured (moist heat treatment) under conditions with a curing temperature of 121°C and a curing time of 60 minutes.

The moist heat treated module was washed with water at 20°C for 30 minutes or longer to obtain a forward osmosis membrane module having an effective length of 430 mm and a membrane area of 1.0 m$^2$. In the forward osmosis membrane obtained in Example 1, the arithmetic mean height (Sa) of the separation function layer was 132 nm.

<Examples 2 to 11 and Comparative Examples 1 to 6>

Evaluation was carried out under the same conditions as Example 1, except for changing the porous hollow fiber support membrane material, the dense layer physical properties, the separation function layer location, the polymerization conditions, the average thickness and coefficient of variation, the curing conditions and the module membrane area, as shown in Table 1.

More specifically, for Example 4, 240 porous hollow fiber support membranes were packed into a cylindrical plastic housing to fabricate a support membrane module having an effective membrane inner surface area of 0.2 m$^2$.

In Example 6, a hollow fiber spinning stock solution was prepared containing 19 weight% of polyether sulfone (PES; Ultrason E2020P by BASF Co.) and 20 weight% of tetraethylene glycol.

In Example 7, a hollow fiber spinning stock solution containing 21 weight% of PSf and 20 weight% of tetraethylene glycol was prepared and used, and the internal solidifying solution was passed through the module at 5°C to set the difference in temperature between the stock solution temperature and the internal solidifying solution (stock solution temperature - internal solidifying solution temperature) to 30°C.

In Example 9, a hollow fiber spinning stock solution containing 20 weight% of PSf and 20 weight% of tetraethylene glycol was prepared and used, and the internal solidifying solution was passed through the module at 5°C to set the difference in temperature between the stock solution temperature and the internal solidifying solution (stock solution temperature - internal solidifying solution temperature) to 30°C.

In Example 10, the internal solidifying solution was passed through the module at 15°C to set the difference in temperature between the stock solution temperature and internal solidifying solution to 20°C (stock solution temperature - internal solidifying solution temperature), and 120 porous hollow fiber support membranes were packed into a cylindrical plastic housing to fabricate a support membrane module with an effective membrane inner surface area of 0.1 m$^2$.

In Example 11, a hollow fiber spinning stock solution containing 19 weight% of polyether sulfone (PES; Ultrason E2020P by BASF) and 20 weight% of tetraethylene glycol was prepared, and the internal solidifying solution was passed through the module at 30°C to set the difference in temperature between the stock solution temperature and the internal solidifying solution (stock solution temperature - internal solidifying solution temperature) to 5°C.

In Comparative Example 1, a hollow fiber spinning stock solution was prepared comprising 18 weight% of terminal hydroxide-modified polyether sulfone (PES-OH; Ultrason E2020PSR by BASF) and 20 weight% of tetraethylene glycol dissolved in N,N-dimethyl acetamide (DMAc), and 50 weight% of tetraethylene glycol was added as an additive to the internal solidifying solution.

In Comparative Example 6, a hollow fiber spinning stock solution comprising 19 weight% of polysulfone (PSf; Udel-P3500 by Solvay Specialty Polymers) and 81 weight% of N-methyl-2-pyrrolidone (FujiFilm-Wako Pure Chemical Industries) was prepared and used, 20 weight% of tetraethylene glycol was added as an additive to the internal solidifying solution, and the internal solidifying solution was passed through the module at 35°C to set the difference in temperature between the stock solution temperature and internal solidifying solution (stock solution temperature - internal solidifying solution temperature) to 0°C.

In Comparative Example 5, a 20 weight% N,N-dimethylformamide (DMF) solution of polysulfone was cast onto a polyester nonwoven fabric (air flow rate: 3 cc/(cm$^2$ × sec)) as the substrate to a thickness of 190 $\mu$m at 25°C, and then immersed in a coagulating solution at 25°C and allowed to stand for 20 minutes, to fabricate a 200 $\mu$m-thick flat support membrane comprising a laminate of a polyester nonwoven fabric substrate and a polysulfone porous support.

The surface of the support membrane on the polysulfone porous support side was contacted for 20 minutes with an aqueous solution containing 2.0 weight% of m-phenylenediamine and 0.15 weight% of sodium lauryl sulfate (first solution). Air was then flowed over the first solution-coated surface to remove the excess solution. Next, an n-hexane solution comprising 0.23 weight% of 1,3,5-trimesoyl chloride (second solution) was contacted for 2 minutes with the first solution-coated surface for interfacial polymerization, thereby forming a separation function layer on the surface of the flat support membrane to form a separation function layer on the porous support.

Nitrogen gas was then flowed over the separation function layer-formed surface to remove the excess second solution, and hot water at 45°C was passed over the separation function layer-formed surface for 30 minutes. The obtained membrane was placed in an autoclave and high-temperature stream at 121°C was circulated through for 60 minutes, after which it was washed with water at 20°C for 30 minutes to obtain a flat forward osmosis membrane.

The obtained forward osmosis membrane was cut to a predetermined size and placed in a housing to fabricate a flat membrane cell having a membrane area of 1.0 m$^2$.

With a flat membrane, the position of the separation function layer is represented as front or back, unlike hollow fibers. The back is the side contacting with the nonwoven fabric during fabrication of the support membrane, while the front is the side more in contact with the coagulating solution.

In Examples 2 to 7 and Examples 9 to 11, curing was carried out with the entire modules washed with hot water placed in the autoclave while immersed in a water tank at 45°C or below, or with the modules placed in the autoclave while encapsulating water at 45°C or below (with 70% or more of the space on the separation function layer side filled with water and sealed to prevent liquid overflow, at least in the initial state) (this method is indicated as "water immersion AC" in Table 1).

In Comparative Examples 3 and 4, the excess n-hexane solution was removed with nitrogen gas without carrying out curing by AC or water immersion AC, after which the module was dried for 20 minutes at temperatures of 50°C and 125°C for curing.

The measurement results and evaluation results for Examples 1 to 11 and Comparative Examples 1 to 6 are shown in Table 1.

[Table 1]

| | Support membrane | | | Separation function layer | | | | | Curing | | Module | | After DS pressure fluctuation test (0 kPa ←→ 100 kPa) | | | |
|---|---|---|---|---|---|---|---|---|---|---|---|---|---|---|---|---|
| | Sub-strate | Materi-al | Void per-centage up to 1.0 $\mu$m depth from sur-face [%] | Loca-tion | Pressure reduction on outside during po-lymerization | Irregu-lar struc-ture | Aver-age thick-ness [$\mu$m] | Coeffi-cient of variation in aver-age thick-ness [%] | Method | Tempera-ture [°C] | Effec-tive length [mm] | Mem-brane area [m2] | Stained location evaluation | Flux [kg/(m² × hr)] | RSF [g/(m² × hr)] | RSF/Flux [g/kg] |
| Example 1 | Without | PSf | 19 | Inner surface | With | With | 0.56 | 26 | AC | 121 | 430 | 1.0 | A | 7.4 | 0.25 | 0.034 |
| Example 2 | Without | PSf | 19 | Inner surface | With | With | 0.47 | 20 | Water immersion AC | 121 | 430 | 1.0 | AA | 7.1 | 0.18 | 0.025 |
| Example 3 | Without | PSf | 19 | Inner surface | With | With | 0.43 | 18 | Water immersion AC | 125 | 430 | 1.0 | AA | 7.5 | 0.17 | 0.023 |
| Example 4 | Without | PSf | 19 | Inner surface | With | With | 0.37 | 16 | Water immersion AC | 125 | 430 | 0.2 | AA | 7.9 | 0.18 | 0.023 |
| Example 5 | Without | PSf | 18 | Inner surface | With | With | 0.41 | 17 | Water immersion AC | 132 | 430 | 1.0 | AA | 7.3 | 0.15 | 0.021 |
| Example 6 | Without | PES | 27 | Inner surface | With | With | 0.75 | 25 | Water immersion AC | 125 | 430 | 1.0 | A | 8.5 | 0.51 | 0.060 |
| Example 7 | Without | PSf | 5 | Inner surface | With | With | 0.40 | 19 | Water immersion AC | 125 | 430 | 1.0 | AA | 1.5 | 0.08 | 0.053 |
| Example 8 | Without | PSf | 19 | Inner surface | With | With | 0.68 | 28 | AC | 100 | 430 | 1.0 | A | 8.0 | 0.40 | 0.050 |

| | Support membrane | | | Separation function layer | | | | | Curing | | Module | | After DS pressure fluctuation test (0 kPa ←→ 100 kPa) | | | |
|---|---|---|---|---|---|---|---|---|---|---|---|---|---|---|---|---|
| | Sub-strate | Materi-al | Void per-centage up to 1.0 $\mu$m depth from sur-face [%] | Loca-tion | Pressure reduction on outside during po-lymerization | Irregu-lar struc-ture | Aver-age thick-ness [$\mu$m] | Coeffi-cient of variation in aver-age thick-ness [%] | Method | Tempera-ture [°C] | Effec-tive length [mm] | Mem-brane area [m2] | Stained location evalua-tion | Flux [kg/(m2 × hr)] | RSF [g/(m2 × hr)] | RSF/Flux [g/kg] |
| Exam-ple 9 | Without | PSf | 9 | Inner surface | With | With | 0.42 | 19 | Water immersion AC | 125 | 430 | 1.0 | AA | 3.5 | 0.11 | 0.031 |
| Example 10 | Without | PSf | 13 | Inner surface | With | With | 0.33 | 13 | Water immersion AC | 125 | 430 | 0.1 | AA | 8.1 | 0.16 | 0.020 |
| Example 11 | Without | PES | 35 | Inner surface | With | With | 0.76 | 29 | Water immersion AC | 125 | 430 | 1.0 | B | 9.1 | 0.87 | 0.096 |
| | | | | | | | | | | | | | | | | |
| Comp. Example 1 | Without | PES-OH | 44 | Inner surface | With | With | 0.82 | 31 | AC | 121 | 430 | 1.0 | c | 11.3 | 2.40 | 0.212 |
| Comp. Example 2 | Without | PSf | 19 | Inner surface | Without | With | 2.13 | 69 | AC | 125 | 430 | 1.0 | c | 9.0 | 3.20 | 0.356 |
| Comp. Example 3 | Without | PSf | 19 | Inner surface | With | With | 0.79 | 37 | Drying | 50 | 430 | 1.0 | B | 8.7 | 1.40 | 0.161 |
| Comp. Example 4 | Without | PSf | 14 | Inner surface | With | With | 0.89 | 43 | Drying | 125 | 430 | 1.0 | c | Unmeasur-able | Unmeasur-able | Unmeasur-able |

24

EP 4 364 827 A1

(continued)

| | Support membrane | | | Separation function layer | | | | | Curing | | Module | | After DS pressure fluctuation test (0 kPa ←→ 100 kPa) | | | |
|---|---|---|---|---|---|---|---|---|---|---|---|---|---|---|---|---|
| | Sub-strate | Materi-al | Void per-centage up to 1.0 $\mu$m depth from sur-face [%] | Loca-tion | Pressure reduction on outside during po-lymerization | Irregu-lar struc-ture | Aver-age thick-ness [$\mu$m] | Coeffi-cient of variation in aver-age thick-ness [%] | Method | Tempera-ture [°C] | Effec-tive length [mm] | Mem-brane area [m2] | Stained location evaluation | Flux [kg/(m² × hr)] | RSF [g/(m² × hr)] | RSF/Flux [g/kg] |
| Comp. Exam-ple 5 | With | PSf | 9 | Surface | - | With | 0.41 | 61 | AC | 121 | - | 1.0 | B | 0.8 | 0.17 | 0.213 |
| Comp. Example 6 | Without | PSf | 40 | Inner surface | With | With | 0.80 | 33 | AC | 121 | 430 | 1.0 | c | 10.5 | 2.00 | 0.190 |

REFERENCE SIGNS LIST

1  Hollow fiber membrane module
2  Outer conduit
3  Outer conduit
4  Hollow fibers
5  Adhesive-anchored section
6  Adhesive-anchored section
7  Header
8  Header
9  Inner conduit
10  Inner conduit
11  Porous hollow fiber support membrane module
12  Inside pressure control device
13  Outside pressure control device
14  Second solution storage tank
15  Second solution conveying tube
16  Second solution feed pump
17  Second solution drain tank
18  Second solution drainage tube
19  End cap
20  Effective membrane area portion

**Claims**

1.  A forward osmosis membrane module composed of a plurality of hollow fiber forward osmosis membranes, wherein:

    the forward osmosis membranes each have a separation function layer provided on a surface of a hollow fiber support membrane having a porous support,
    a membrane area of the forward osmosis membrane module is 0.1 m$^2$ or greater,
    the hollow fiber support membrane has a dense layer with a void percentage of 40% or lower at a location up to 1.0 $\mu$m in a depthwise direction from an interface between the porous support and the separation function layer,
    an average thickness of the separation function layer is 2.0 $\mu$m or lower, and
    the separation function layer has a coefficient of variation in the average thickness of the separation function layer of 30% or lower in a radial direction and a lengthwise direction of the forward osmosis membrane module.

2.  The forward osmosis membrane module according to claim 1, wherein the coefficient of variation in the average thickness of the separation function layer is 25% or lower.

3.  The forward osmosis membrane module according to claim 1 or 2, wherein the coefficient of variation in the average thickness of the separation function layer is 20% or lower.

4.  The forward osmosis membrane module according to claim 1 or 2, wherein the separation function layer has an irregular structure.

5.  The forward osmosis membrane module according to claim 1 or 2, wherein the void percentage of the dense layer is 5% or greater.

6.  The forward osmosis membrane module according to claim 1 or 2, wherein the void percentage of the dense layer is 9% to 25%.

7.  The forward osmosis membrane module according to claim 1 or 2, wherein the average thickness of the separation function layer is 0.05 $\mu$m or greater.

8.  The forward osmosis membrane module according to claim 1 or 2, wherein the average thickness of the separation function layer is 0.2 to 0.8 $\mu$m.

9.  The forward osmosis membrane module according to claim 1 or 2, wherein the dense layer has a separation function layer component incorporated into pores of the dense layer.

10. The forward osmosis membrane module according to claim 1 or 2, wherein the separation function layer is provided on an inner surface of the hollow fiber support membrane.

11. The forward osmosis membrane module according to claim 1 or 2, wherein the hollow fiber support membrane consists only of the porous support and the separation function layer.

12. The forward osmosis membrane module according to claim 1 or 2, wherein the porous support includes polysulfone or polyether sulfone as a main component.

13. A method for producing a forward osmosis membrane module, comprising the following steps:

    (I) a separation function layer-forming step in which a plurality of hollow fiber support membranes each with a porous support are used, forming a separation function layer on a surface of each hollow fiber support membrane to fabricate a hollow fiber forward osmosis membrane module comprising hollow fiber forward osmosis membranes,
    (II) a liquid-encapsulating step in which a liquid is encapsulated and held in the hollow fiber forward osmosis membrane module, at least on the separation function layer-forming surface side, and
    (III) a heat treatment step in which temperatures of the hollow fiber forward osmosis membrane module and the liquid are raised to 50°C or higher.

14. The method for producing a forward osmosis membrane module according to claim 13, wherein a membrane area of the forward osmosis membrane module is 0.1 m$^2$ or greater.

15. The method for producing a forward osmosis membrane module according to claim 13 or 14, wherein in the separation function layer-forming step (I), the hollow fiber support membrane has a dense layer at a location up to 1.0 $\mu$m in a depthwise direction from an interface between the porous support and the separation function layer, and a void percentage of the dense layer is 40% or lower.

16. The method for producing a forward osmosis membrane module according to claim 15, wherein in the separation function layer-forming step (I), the void percentage of the dense layer is 10 to 40%.

17. The method for producing a forward osmosis membrane module according to claim 13 or 14, wherein in the separation function layer-forming step (I), the porous support includes polysulfone or polyether sulfone as a main component.

18. The method for producing a forward osmosis membrane module according to claim 13 or 14, wherein in the separation function layer-forming step (I),

    the separation function layer is a membrane including a macromolecular polymer of at least one first monomer selected from among polyfunctional amines and at least one second monomer selected from among polyfunctional acid halides, and
    a liquid membrane of a first solution comprising one of the first monomer and the second monomer is formed on an inner surface of the hollow fiber support membrane, after which a pressure difference is created between an inside and outside of the hollow fiber support membrane, so as to satisfy the relationship: (inside pressure) > (outside pressure), and a second solution comprising the other of the first monomer and second monomer is then contacted with the liquid membrane of the first solution.

19. The method for producing a forward osmosis membrane module according to claim 18, wherein the pressure difference is created by pressure reduction on the outside of the hollow fiber support membrane.

20. The method for producing a forward osmosis membrane module according to claim 18, wherein the pressure difference is created by pressurization of the outside and inside of the hollow fiber support membrane to respectively different pressures.

21. The method for producing a forward osmosis membrane module according to claim 18, wherein the pressure difference is 10 to 90 kPa.

22. The method for producing a forward osmosis membrane module according to claim 13 or 14, wherein in the liquid-encapsulating step (II), the liquid is added to and held on insides and outsides of the hollow fiber forward osmosis membranes.

23. The method for producing a forward osmosis membrane module according to claim 13 or 14, wherein in the liquid-encapsulating step (II), the liquid is pressurized to fill the hollow fiber forward osmosis membranes, so that the liquid is held in the hollow fiber forward osmosis membranes.

24. The method for producing a forward osmosis membrane module according to claim 13 or 14, wherein in the liquid-encapsulating step (II), the liquid is water.

25. The method for producing a forward osmosis membrane module according to claim 13 or 14, wherein in the liquid-encapsulating step (II), the forward osmosis membrane module is immersed in the liquid.

26. The method for producing a forward osmosis membrane module according to claim 13 or 14, wherein in the liquid-encapsulating step (II), the liquid is encapsulated in the forward osmosis membrane module.

27. The method for producing a forward osmosis membrane module according to claim 13 or 14, wherein in the heat treatment step (III), the temperatures of the forward osmosis membrane module and the liquid are raised to 100°C or higher.

28. The method for producing a forward osmosis membrane module according to claim 13 or 14, wherein in the heat treatment step (III), the temperatures of the forward osmosis membrane module and the liquid are raised to 121°C or higher.

29. The method for producing a forward osmosis membrane module according to claim 13 or 14, wherein in the heat treatment step (III), the temperatures of the forward osmosis membrane module and the liquid are raised in a range of 145°C or lower.

30. The method for producing a forward osmosis membrane module according to claim 13 or 14, wherein the heat treatment step (III) includes continuing to raise the temperatures under pressure in a temperature range of a boiling point of the liquid or higher.

FIG. 1

# FIG. 2

## INTERNATIONAL SEARCH REPORT

International application No.

**PCT/JP2022/023659**

**A. CLASSIFICATION OF SUBJECT MATTER**

***B01D 61/00***(2006.01)i; ***B01D 63/02***(2006.01)i; ***B01D 69/00***(2006.01)i; ***B01D 69/02***(2006.01)i; ***B01D 69/08***(2006.01)i; ***B01D 69/10***(2006.01)i; ***B01D 69/12***(2006.01)i; ***B01D 71/56***(2006.01)i; ***B01D 71/68***(2006.01)i

FI: B01D61/00 500; B01D63/02; B01D69/00; B01D69/02; B01D69/08; B01D69/10; B01D69/12; B01D71/56; B01D71/68

According to International Patent Classification (IPC) or to both national classification and IPC

**B. FIELDS SEARCHED**

Minimum documentation searched (classification system followed by classification symbols)

B01D61/00; B01D63/02; B01D69/00; B01D69/02; B01D69/08; B01D69/10; B01D69/12; B01D71/56; B01D71/68

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

B01D53/22, 61/00-71/82, C02F1/44

**C. DOCUMENTS CONSIDERED TO BE RELEVANT**

| Category* | Citation of document, with indication, where appropriate, of the relevant passages | Relevant to claim No. |
|---|---|---|
| X | WO 2020/241860 A1 (ASAHI KASEI KABUSHIKI KAISHA) 03 December 2020 (2020-12-03)<br>    paragraphs [0023]-[0108], fig. 1 | 1-30 |
| A | JP 2019-115897 A (KURARAY CO) 18 July 2019 (2019-07-18)<br>    claims | 1-30 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **03 August 2022** | **16 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/023659**

| Patent document cited in search report | Publication date (day/month/year) | Patent family member(s) | Publication date (day/month/year) |
|---|---|---|---|
| WO 2020/241860 A1 | 03 December 2020 | CA 3142200 A1 paragraphs [0023]-[0108], fig. 1 | |
| JP 2019-115897 A | 18 July 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011194272 A
- JP 2018039003 A
- WO 2019131304 A
- WO 2020241860 A